# EUROPEAN PATENT APPLICATION

(11) **EP 1 384 505 A1**
(43) Date of publication of application: **28.01.2004**
(21) Application number: 02386010.9
(22) Date of filing: 03.07.2002
(51) Int. Cl.: B01J 19/08, B01J 19/12, A62D 3/00

(54) **Elaboration method of an organic or/and inorganic substance for modifying its physico-chemical properties**

(30) Priority: 03.07.2002 GR 2002100319
(71) Applicant: Athanasios tou Panagioti, Nikolaou, 19100 Megara, Attica (GR)
(72) Inventor: Athanasios tou Panagioti, Nikolaou, 19100 Megara, Attica (GR)
(74) Representative: Argyriadis, Korinna

(57) **Abstract**

A method for the treatment of the organic and/or the inorganic matter, for the beneficial modification of its physicochemical properties, and in case the matter is characterized as a polluting waste, the reduction of its polluting load, the reduction or even the elimination of its toxic and mutagenic effects on biological organisms, whose application uses electronic and/or electromechanical technology, so as to produce and transmit towards the space occupied by the mass of the matter chosen to be treated (1) synthetic electromagnetic emission consisting of a defined and/or undefined multitude of emissions of electromagnetic waves (6) of dissimilar frequencies, which function with time discontinuity and are produced by electronic and/or electromechanical devices (3) occupying a big part or parts or even the entire very broad frequency range of the electromagnetic spectrum, from 1 Hz to 300 GHz.

## Description

The present invention refers to a method for the treatment of organic and/or inorganic matter, which is applied by utilizing electronic and/or electromechanical technology, aiming at the beneficial modification of the physicochemical properties of the treated matter, and in case the matter is characterized as a polluting waste, the reduction of its polluting load, the reduction or even the elimination of its toxic and mutagenic effects on biological organisms; the application of this method consists of treating the organic and/or inorganic matter by transmitting a plethora of emissions of electromagnetic waves of dissimilar frequencies, that occupies a part or parts or even the entire very broad frequency range of the electromagnetic spectrum, from 1Hz to 300 GHz, towards the space occupied by the mass of the organic and/or the inorganic matter.

During the last decades, the problem of the pollution of water resources becomes more and more alarming. The massive increase in the industrial production, motivated by the necessity to meet the needs of modern societies, has led to the unaccounted use of large quantities of pure water in a broad range of production activities. These quantities return to the natural receivers (soil, seas, lakes, rivers, etc.), having acquired a big contaminated and toxic load (organic compounds, biodegradable or not, inorganic salts, acids, bases, heavy metal ions, etc.). This contaminant load is one of the major causes of environmental pollution and its toxic effects on living organisms may be either direct (heavy metals, poisonous or mutagenic organic compounds, etc.) or indirect, by affecting negatively the equilibrium of ecosystems (e.g. eutrophication phenomena).
To address the aforementioned problem, the scientific community has developed a very large number of liquid waste treatment processes, which aim, mainly, at reducing its polluting load. These methods, however, are for the most part specialized and, consequently, each one of them applies only to a specific type of waste. On the other hand, they require large and expensive plants, while usually they are also characterized by particularly high operation costs. Finally, many of them lead to the production of secondary wastes.

The present invention refers to the technology disclosed by the same Registrant in the publications of his previous applications for patent grant with the numbers: EP0987323, EP1092354, EP1099745, EP1154030. The inventive activity of the present invention is the extension of the applications of the same method to a broad range of products consisting of organic and/or inorganic matter, aiming at the beneficial modification of their physicochemical properties. The breadth of objectives disclosed by this invention had not been disclosed in my previous applications for patent grants.

The present invention aims at treating a broad range of products, useful or not, with the view to achieve one or any combination of the following results.
The reduction of the entropy of products consisting of organic and/or inorganic matter, i.e. ΔS=S₂-S₁<0, where ΔS is the difference in the degree of entropy, S₂ is the entropy degree of the product treated with this method and S₁ the entropy degree of the same product prior to its treatment with the method described in the present invention, at constant temperature and pressure conditions. Entropy reduction is achieved for a broad range of products, such as: food, animal feed, fish feed, cosmetics, fertilizers, potable water, medicines, perfumes, detergents, etc.
In wastes (for the purposes of this document, the term "waste" means the matter which exists in solid, liquid or gaseous state and/or in any possible combination of its three basic states, which is a carrier of toxic and/or contaminant properties and which is a useless and harmful product of industrial, urban and agricultural activity) the application of this method achieves the reduction and/or elimination of their contaminant load, the elimination of their biotoxicity and the beneficial alteration of its physicochemical parameters.
The application of this method leads to the following segregation: On the one part, elements or compounds of mild toxic activity which are mostly products of natural processes, such as alcohols, fats, salt solutions, compounds which comprise part of the BOD, are susceptible to an energy differentiation in order to reduce their entropy degree and to increase their atomic movement, while they remain at the same frequency of nuclear magnetic resonance, that is their chemical identity remains unchanged, but several of their physical properties, such as activity, volatility, surface tension, fluidity, thermal capacity are changing, thereby becoming balanced and beneficial for the biological organisms and the environment. On the other part, elements or compounds of high or very high toxic or contaminating activity, mostly products of human activities, such as heavy metal ions, furans, phenols, dioxins, PCBs, etc., which are not susceptible to beneficial energy differentiation, the attractive electromagnetic forces between the electrons and the nucleus weaken, a fact that results in their elimination and/or the weakening of their molecular bonds and/or the breaking up of the molecular lattice, which, in turn, leads to their transition to other balanced and harmless elements and/or compounds.
The present method is applied to any kind of waste, arising out of any source (industrial, urban, agricultural, etc.).
The method utilizes the resonance phenomenon in order to bring the aforementioned results on the organic and/or the inorganic matter.
The application of this method utilizes electronic and/or electromechanical technology, so as to produce and use for conducting its work a plethora of emissions of dissimilar frequencies of electromagnetic waves that occupies a broad part or parts or even the entire broad frequency range of the electromagnetic spectrum, from 1Hz to 300 GHz.
The application of the method is realized by emitting towards the space occupied by the mass of the organic and/or the inorganic matter, electromagnetic energy of synthetic electromagnetic emission, comprising by a defined and/or undefined multitude of emissions of dissimilar frequencies of electromagnetic waves.
The application of this method aims at and achieves to exploit the emitted action of impulse excitation of each emission of electromagnetic waves of defined frequency, in order to coincide appropriately with each one among the number of natural oscillation frequencies of each atomic and/or molecular system and/or broad macroscopic system of elements of the organic and/or the inorganic matter, so as to arrive to resonance conditions with the impulse excitation action of suitable frequency produced by the electromagnetic energy source used for the application of the method.

Each emission of defined frequency of electromagnetic waves used for the application of the method is performed with time interruption (time discontinuity) and/or having any form of pulse, the intensity of its impulse excitation activity (coercion force)is modified until it is nullified. I.e. the flow of the electromagnetic waves of defined frequency is discontinuous and/or their intensity is modified until it is nullified.
Moreover, the composite emission comprising of a multitude of emissions of electromagnetic waves of dissimilar frequencies functions with time interruption (time discontinuity) and/or having any form of pulse, its intensity is modified until it is nullified.

The synthetic electromagnetic emission may have also a form with the characteristics of the Gaussian White Noise and/or the Uniform White Noise and/or the 1/F Noise and/or the Shot Noise and/or the characteristics of any combination of these and/or other forms of synthetic electromagnetic emission which can be detected with suitable devices at the space occupied by the mass of the matter to be treated and recognized as a technically emitted electromagnetic noise, which contains a plethora of emissions of electromagnetic waves of dissimilar frequencies and whose emission mode is characterized by time discontinuity and/or by the change of their intensity up to their nullification having any form of pulse.

Each emission of electromagnetic waves of defined frequency functions with symmetrical and/or asymmetrical duration of time interruption and operation and/or with any synthesis of symmetrical and/or asymmetrical duration of time interruption and operation and with alteration until the nullification of its intensity by using any simple or composite form of pulses. Also, the synthetic emission that consists of a multitude of emissions of dissimilar frequencies of electromagnetic waves functions with symmetrical and/or asymmetrical duration of time interruption and operation and/or with any synthesis of symmetrical and/or asymmetrical duration of time interruption and operation and with alteration until the nullification of its intensity using a simple or a complex form of pulses.

The time concerning the interruption of each emission of defined frequency of electromagnetic waves and/or the interruption of the synthetic emission as a whole, may have any value in the time range, from 1 picosecond to 20 seconds, preferably 1 microsecond to a maximum of 2 seconds and the operation time of each emission of defined frequency of electromagnetic waves (6) and/or the synthetic emission may have any value in the time range, from 1 femptosecond to 5 seconds, preferably 1 nanosecond to a maximum of 1 second.
The effects of the work on the organic and/or the inorganic matter are totally satisfactory when the application of the method uses a plethora of emissions of electromagnetic waves of dissimilar frequencies, which occupies in the way mentioned above the entire very broad frequency range of the electromagnetic spectrum, from 1Hz to 300 GHz, whose intensity values are the same or different and bring the desired results by maintaining their intensity at low levels, so as not to lead to a significant increase in the temperature of the matter chosen to be treated.

In addition, the effects of the work on the organic and/or the inorganic matter are equally satisfactory when the application of the method uses a plethora of emissions of electromagnetic waves of dissimilar frequencies, occupying, in the way mentioned above, a broad frequency range or frequency ranges of the electromagnetic spectrum from 1Hz to 300 GHz, with the same or different intensity. For example, a device producing a plethora of electromagnetic waves of dissimilar frequencies and occupies the frequency range of the electromagnetic spectrum from 50 Hz to 100 KHz and/or a device producing a plethora of electromagnetic waves of dissimilar frequencies and occupies the frequency range of the electromagnetic spectrum from 150 KHz to 1500 MHz and/or a device producing a plethora of electromagnetic waves of dissimilar frequencies and occupies the frequency range of the electromagnetic spectrum from 900 MHz to 10 GHz and/or a device producing a plethora of electromagnetic waves of dissimilar frequencies and occupies the frequency range of the electromagnetic spectrum from 2GHz to 30 GHz.

It is preferable for reasons of easiness in the utilization of the electronic and/or electromechanical technology for the application of the method to use a plethora of emissions of electromagnetic waves of dissimilar frequencies occupying a part or parts or even the entire frequency range of the electromagnetic spectrum from 10Hz to 40GHz.

The work of the method's application becomes more effective as to the time of its completion, when more than one synthetic emissions of electromagnetic waves of dissimilar frequencies are simultaneously emitted at the same space which is occupied by the mass of the organic and/or the inorganic matter to be treated.

In addition, the synthetic emission that consists of a multitude of emissions of electromagnetic waves of dissimilar frequencies as a whole and every emission of defined frequency of electromagnetic waves may be modulated with any modulation technique, such as, for example, frequency modulation (FM), amplitude modulation (AM), pulse code modulation or other modulations.
One of the main advantages of this method, is that it can be applied without any restrictions to a very broad range of industrial waste products; for example, I mention some fields of activity: treatment of urban and industrial liquid and solid wastes, treatment oriented to the elimination of dangerous toxic substances, production of paper, production of lubricants, production of rubber items, production of plastics, production of paints, production and processing of liquid and solid food, food treated with ionizing radiation, production of cosmetics, production of medicines for humans and animals, production of liquid and solid agricultural fertilizers, production of liquid and solid animal and fish feed, processing and bottling of potable water, processing and bottling of potable water for urban use, processing and bottling of water for agricultural use, production of non-alcoholic beverages, etc.

Another advantage of this method is that it has a very broad application range and, moreover, it does not require any modifications in the applied specifications of the existing industrial plants in the field of treatment of the organic and/or the inorganic matter, which may eventually exist in any basic state (solid- liquid-gaseous) or in any synthesis of these states of the matter.
Another advantage of this method is that its application is cost-effective, as it demands a minimal operational cost, as well as that the manpower cost required for the application of this method is almost insignificant.

Another advantage of this method is that the treatment of the organic and/or the inorganic matter commences as soon as the method begins to be applied, while the application time required for the accomplishment of the desired result is short, measurable in hours. For example, a volume of 10,000 cubic meters of liquid waste can be treated with this method in a time period of 24 hours.

Another advantage of this method is that it is mostly applied directly onto the final product, even after its packaging and while it is being stored, e.g. in industrial warehouses or even to the collection points of liquid or solid wastes of the various industrial plants.

The invention is described in brief hereafter, with the aid of non-restrictive examples and with reference to the diagram attached hereto, which shows one form of application of this method that constitutes the subject matter of this invention.

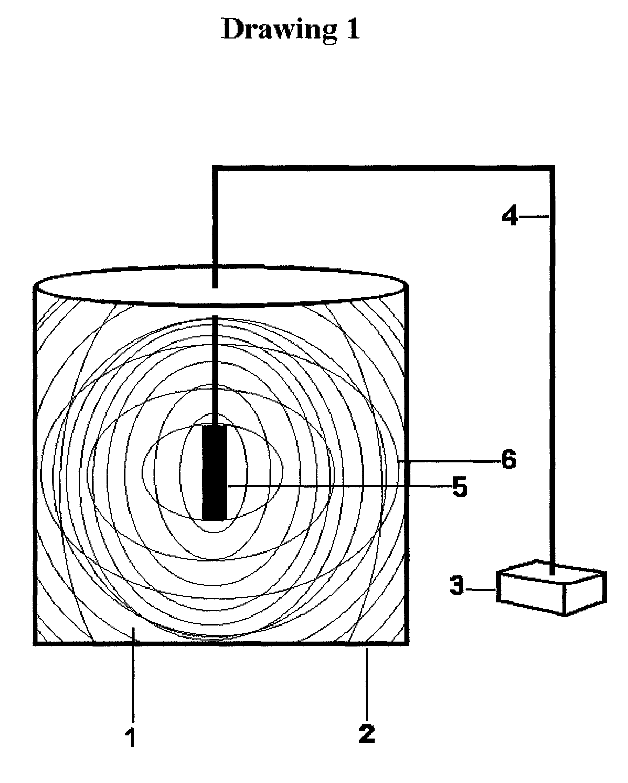

Diagram 1 presents one way of application of the invention in a tank used for the treatment of liquid waste, consisting of organic and inorganic matter.
The liquid waste (1) is gathered in a common treatment tank (2) at the usual temperature. Next to the tank, an electronic or electromechanical device (3) is installed, capable of producing a multitude of electromagnetic wave emissions (6) of dissimilar frequencies and modulation of the operation mode of these emissions, from where a conductor conveys (4), ending at the emission antenna (5) of the electromagnetic waves (6) of dissimilar frequencies, which is placed into the tank (2) and the mass of the liquid waste (1). The plethora of electromagnetic wave emissions (6) of dissimilar frequencies is emitted towards the space occupied by the mass of the liquid waste (1). The emission antenna (5) may be either an integral part of the emission device (3), or connected thereto by means of a conductor (4).

One way of realization of the method with electronic technology, is the use of an electronic device (3), which can produce a synthetic electromagnetic emission comprising of a defined and/or undefined multitude of emissions of defined frequency of electromagnetic waves (6), so as these emissions occupy a very broad frequency range of the electromagnetic spectrum from 1Hz to 300 GHz.

By using the main characteristic of the method, which is the timely interrupted operation of each emission of defined frequency of electromagnetic waves (6), and/or the changing of its intensity until it is nullified, with any simple or composite form of pulses, we construct a device for the production of the emission in the following way:
The device (3) consists of four units, of which the first one consists of a function generator with adjustable duty cycle; for example, at its output an adjustment of it will give us symmetrical square pulses at a frequency of 200 KHz.
The signal received from the output of the first unit is directed to the second unit, which consists of an electronic circuit, operating as supply voltage convector, i.e. from its output we will take the supply voltage of the third unit.
The third unit consists of a free oscillator with output power of 1.5 Watt, tuned at a frequency of 600 MHz, without filters for cutting off the produced harmonic frequencies at its output. Knowing that the emission frequency of a free oscillator depends on the stability of its supply voltage, we produce a shift at its operation frequency, by interrupting its supply from the second unit, the supply voltage convector, so as to increase the frequency when the voltage reduces, and reduce the frequency when the supply voltage increases. In this way, as the oscillator will operate with a periodically interrupted supply voltage, the way we adjusted it through the first and second units, we will obtain a timely interrupted operation of the oscillator and, at the same time, a continuous variation of the produced central frequency, including the harmonic frequencies produced by it, which results in the creation of a multitude of signals of dissimilar frequencies at a broad frequency range.
The output of the third unit is directed to the input of a high frequency amplifier (RF), with broad operation range from 100 KHz to 1.2 GHz, which can amplify its input signal up to 20 Watt, and which is the fourth unit of the device. The final amplified signal from the output of the fourth unit, without filters for the reduction of the harmonic frequencies, is conveyed through a coaxial convector to the emission antenna (5), where the signal is transmitted in the form of a synthetic emission, consisting of a plethora of emissions of electromagnetic waves (6) of dissimilar frequencies.
With an electromagnetic spectrum analyzer we can ascertain that the synthetic emission, created by these electronic circuits, has the form of a white noise and occupies the frequency range of the electromagnetic spectrum from 2 KHz to 3 GHz.

This device (3) for the practical application of the method mentioned herein, is suitable for the treatment of the organic and/or the inorganic matter (1), existing in liquid and/or solid state, occupying a volume up to a maximum of 2000 m³, yielding measurable results of beneficial modification of its physicochemical properties in a time period of 1 hour, achieving the highest level of usefulness through the modification of its physicochemical properties in a time period of 24 hours.

The easy practical application of the method allows its use at a broad industrial scale, without technical or construction restrictions.

## Claims

1. A method for the treatment of the organic and/or the inorganic matter (1) for the beneficial modification of its physicochemical properties, whose application is using electronic and/or electromechanical technology in order to produce and use for the application of the said method for the treatment of matter, a plethora of emissions of electromagnetic waves (6) of dissimilar wavelength, **characterized by** the fact that, it is transmitted towards the space occupied by the mass of the matter to be treated (1) electromagnetic energy coming from a synthetic electromagnetic emission that occupies broader ranges of frequencies of the electromagnetic spectrum, which contains a defined and/or undefined multitude of emissions of electromagnetic waves (6) of dissimilar frequencies and is produced by electronic and/or electromechanical devices (3), where each emission of defined frequency of electromagnetic waves (6) and/or the synthetic emission as a whole, does not have a continuous operation in time, but has an operation mode that includes its time interruption and/or the alteration until the nullification of its intensity with any simple or composite form of pulses.

2. A method for the treatment of the organic and/or the inorganic matter (1) for the beneficial modification of its physicochemical properties, according to claim 1, according to which the organic and/or the inorganic matter when characterized as a polluting waste (1) is accomplished the reduction of its polluting load, the reduction or even elimination of its toxic and mutagenic effects on biological organisms.

3. A method for the treatment of the organic and/or the inorganic matter (1) for the beneficial modification of its physicochemical properties, according to claims 1 and 2, **characterized by** the fact that the synthetic electromagnetic emission may have a form with the characteristics of the Gaussian White Noise and/or the Uniform White Noise and/or the 1/F Noise and/or the Shot Noise and/or the characteristics of any combination of these and/or other forms of synthetic electromagnetic emission that is detected at the space occupied by the mass of the matter to be treated and recognized as technically emitted electromagnetic noise.

4. A method for the treatment of the organic and/or the inorganic matter (1) for the beneficial modification of its physicochemical properties, according to claims 1, 2 and 3, **characterized by** the fact that every emission of electromagnetic waves (6) of defined frequency and/or the synthetic emission which contains a multitude of emissions of electromagnetic waves (6) of dissimilar frequencies operates with symmetrical and/or asymmetrical duration of time of interruption and operation and/or with any combination of symmetrical and/or asymmetrical duration of time of interruption and operation and alteration until the nullification of its intensity with any simple or composite form of pulses.

5. A method for the treatment of the organic and/or the inorganic matter (1) for the beneficial modification of its physicochemical properties, according to claims 1, 2, 3 and 4, **characterized by** the fact that the interruption time of each emission of defined frequency of electromagnetic waves (6) and/or the synthetic emission may have any value within the time range, from 1 picosecond to 20 seconds, preferably 1 microsecond to a maximum of 2 seconds and the operation time of each emission of defined frequency of electromagnetic waves (6) and/or the synthetic emission may have any value in the time range, from 1 femptosecond to 5 seconds, preferably 1 nanosecond to a maximum of 1 second.

6. A method for the treatment of the organic and/or the inorganic matter (1) for the beneficial modification of its physicochemical properties, according to claims 1, 2, 3, 4 and 5, **characterized by** the fact that the emissions of dissimilar frequencies of electromagnetic waves (6) have among them a different and/or the same intensity and occupy a broad part or parts or even the entire very broad frequency range of the electromagnetic spectrum, from 1 Hz to 300 GHz, so as that the emitted impulse excitation action of each emission of defined frequency of electromagnetic waves (6), appropriately coincides with the natural oscillation frequency of each atomic and/or molecular and/or broadest macroscopic system of the elements of the matter to be treated (1), which may exist in solid, liquid or gaseous state and/or in a state with any quantitative combination of the aforementioned basic states, thereby creating resonance conditions.

7. A method for the treatment of the organic and/or the inorganic matter (1) for the beneficial modification of its physicochemical properties, according to claims 1, 2, 3, 4, 5 and 6, **characterized by** the fact that a plethora of emissions of electromagnetic waves (6) of dissimilar frequencies, occupying a broad part or parts or even the entire very broad frequency range of the electromagnetic spectrum, from 1 Hz to 300 GHz, preferably the broad frequency range from 10 Hz to 40 GHz, are transmitted towards the mass of the matter to be treated (1).

8. A method for the treatment of the organic and/or the inorganic matter (1) for the beneficial modification of its physicochemical properties, according to claims 1, 2, 3, 4, 5, 6 and 7, **characterized by** the fact that the application of the method is realized with one mechanism at least, which, during its operation, transmits synthetic emission consisting of a defined and/or undefined multitude of emissions of electromagnetic waves (6) of dissimilar frequencies.

9. A method for the treatment of the organic and/or the inorganic matter (1) for the beneficial modification of its physicochemical properties, according to claims 1, 2, 3, 4, 5, 6, 7 and 8, **characterized by** the fact that the application of the method is realized with more than one mechanisms operating simultaneously or/and non - simultaneously and that each mechanism emits with the same or with a different intensity a defined and/or undefined multitude of emissions of dissimilar frequencies of electromagnetic waves (6) and/or the same frequencies as the other mechanisms.

10. A method for the treatment of the organic and/or the inorganic matter (1) for the beneficial modification of its physicochemical properties, according to claims 1, 2, 3, 4, 5, 6, 7, 8 and 9, **characterized by** the fact that the synthetic emission, which consists of a multitude of emissions of electromagnetic waves (6) of dissimilar frequencies as a whole and every emission of defined frequency of electromagnetic waves (6) may be also correlated with any modulation technique.

11. A method for the treatment of the organic and/or the inorganic matter (1) for the beneficial modification of its physicochemical properties, according to claims 1, 2, 3, 4, 5, 6, 7, 8, 9 and 10, **characterized by** the fact that the total power supplied by the electromagnetic emissions, to the mass of the matter to be treated (1), yields the desired results with its maintenance at low levels, so as not to cause a significant increase in the temperature of the matter to be treated (1), either with the use of one mechanism (3) or with the use of more mechanisms.
